# FASCICULE DE BREVET EUROPEEN

(11) **EP 2 926 429 B1**
(45) Date de publication et mention de la délivrance du brevet: **10.05.2017**
(21) Numéro de dépôt: 13785413.9
(22) Date de dépôt: 28.10.2013
(51) Int. Cl.: H02H 7/12, H02H 9/04, H02M 3/335

(54) **DISPOSITIF DE PROTECTION CONTRE LES SURTENSIONS POUR ALIMENTATION D'AUTOMATE**
VORRICHTUNG ZUM SCHUTZ GEGEN ÜBERSPANNUNGEN FÜR AUTOMATENSTROMVERSORGUNG
DEVICE FOR PROTECTING AGAINST OVERVOLTAGE FOR AUTOMATION POWER SUPPLY

(30) Priorité: 30.11.2012 FR 1261476
(43) Date de publication de la demande: 07.10.2015
(73) Titulaire: Schneider Electric Industries SAS, 92500 Rueil-Malmaison (FR)
(72) Inventeur: CAMBEFORT, Henri, F-06560 Valbonne (FR); CHAPIER, Pascal, F-06560 Valbonne (FR)
(74) Mandataire: Dufresne, Thierry
(86) Numéro de dépôt international: PCT/EP2013/072538
(87) Numéro de publication internationale: WO 2014/082805

(56) Documents cités:
- DE-A1- 3 732 334
- US-A- 4 761 702
- US-A- 5 297 014

## Description

La présente invention concerne l'alimentation d'un automate programmable, et plus précisément un dispositif visant à protéger une telle alimentation contre les surtensions.

Le dispositif selon l'invention a pour objectif de traiter le problème de surtensions pouvant survenir sur l'alimentation d'un automate, celles-ci ayant souvent une incidence sur la logique des modules d'entrées / sorties ou du processeur dudit automate, et, potentiellement, un impact sur le(s) process géré(s) par ledit automate.

Selon l'état de la technique, l'homme du métier connaît des automates comprenant des modules d'entrées / sorties ou des processeurs comprenant des moyens d'autocontrôle afin de garantir qu'aucun comportement non sécurisé ne peut survenir. Des tels moyens sont par exemple décrits dans les documents suivants : FR 2 924 287 ; FR 2 924 226 ; FR 2924 227 ; FR 2 924 238.

Le document DE3732334A1 décrit également un dispositif de protection contre les surtensions.

Cependant, ces moyens connus sont insuffisants car il est par ailleurs nécessaire de pouvoir garantir que ces modules d'entrées / sorties et processeurs sont placés dans une plage d'alimentation qui leur permet d'effectuer ces autocontrôles.

Généralement, cela est garanti dans les automates actuels par la présence de moyens complémentaires de contrôle de sous-tensions et de surtensions placés au niveau desdits modules d'entrées / sorties et desdits processeurs.

De ce fait, dans un contexte dans lequel un automate doit pouvoir être certifié comme ayant un comportement sécurisé, seuls le processeur et les modules d'entrées / sorties ont effectivement besoin d'être individuellement certifiés comme ayant un comportement sécurisé, par exemple selon la norme SIL3, pour Safety Integrity Level 3 signifiant niveau 3 d'intégrité de la sécurité.

En revanche, l'alimentation peut ne pas être certifiée à condition de pouvoir être référencée comme élément « non-interférant », pouvant collaborer avec des équipements certifiés sans interférer avec les conditions de certification de ces équipements. La condition à remplir se traduit par le fait que le comportement de sécurité de ces équipements certifiés ne peut pas être impacté par un défaut qui surviendrait au niveau de cette alimentation, notamment la délivrance d'une surtension.

Le fait de ne pas avoir à certifier l'alimentation représente une économie potentielle très significative.

Ainsi, l'objet de l'invention consiste à proposer un dispositif pour une alimentation d'automate programmable permettant de garantir ladite alimentation comme étant un élément non-interférant sur le fonctionnement sécurisé d'autres composants dudit automate programmable, tels que des modules d'entrées / sorties ou un processeur qui n'intègrent pas de moyens de contrôle de surtensions éventuelles au niveau de leur tension d'alimentation.

En effet, la réalisation d'un contrôle et d'une protection contre les surtensions au niveau des modules d'entrées / sorties ou d'un processeur se révèle coûteuse. De plus, la mise en oeuvre d'une telle protection contre les surtensions au niveau des modules d'entrées / sorties ou du processeur implique une ouverture du circuit d'alimentation et, en complément, une isolation du bus situé en aval pour éviter une « rétro-alimentation » par les signaux du bus. Il est ainsi nécessaire de garantir que cette double action est bien réalisée en cas de détection d'une surtension.

Pour s'affranchir de la mise en oeuvre des double-protections, nécessaires dans l'état de la technique, au niveau des modules d'entrées / sorties et des processeurs des automates dont il faut garantir le comportement sécurisé, la présente invention vise à doter l'alimentation de tels automates de moyens rendant ladite alimentation « non-interférante » sur les modules d'entrées / sorties et processeurs sécurisés. Ces moyens formant un dispositif de protection contre les surtensions permettent de garantir que l'alimentation ne peut pas fournir une tension supérieure à la tension maximale autorisée par les modules d'entrées / sorties et processeurs sécurisés, et le cas échéant certifiés.

A cet effet, l'invention concerne un dispositif de protection contre les surtensions apte à s'adapter sur une alimentation d'automate programmable, ladite alimentation comportant un circuit primaire recevant de l'énergie à convertir via un canal d'entrée et comprenant une alimentation auxiliaire primaire, et un circuit secondaire couplé au circuit primaire, présentant un canal de sortie où peut être mesurée une tension de sortie et sur lequel est connectée une diode de sortie, et comprenant par ailleurs :
- un premier dispositif de détection et de protection apte à mesurer la tension en un premier point du circuit secondaire ou du circuit primaire, à comparer la tension mesurée audit premier point à une première tension seuil et à déclencher un court-circuit si ladite tension mesurée au premier point est supérieure à ladite première tension seuil, de manière à stopper tout transfert d'énergie au canal de sortie ;
- un deuxième dispositif de détection et de protection apte à mesurer la tension en un deuxième point situé sur ladite alimentation auxiliaire primaire, de façon à mesurer une tension image de la tension de sortie, à comparer la tension mesurée audit deuxième point à une deuxième tension seuil et à déclencher un court-circuit si ladite tension mesurée au deuxième point est supérieure à ladite deuxième tension seuil, de manière à stopper tout transfert d'énergie au canal de sortie.

Avantageusement, le premier dispositif de détection et de protection comprend par ailleurs un thyristor disposant d'une alimentation autonome et apte à conserver par effet mémoire le court-circuit éventuellement survenu.

Avantageusement, le circuit primaire comprenant un convertisseur primaire un dispositif de boucle de régulation comprenant un générateur d'impulsions contrôlant ledit convertisseur primaire par l'intermédiaire duquel le circuit primaire est connecté au circuit secondaire, ledit court-circuit visant à stopper tout transfert d'énergie au canal de sortie se traduit par un court-circuitage dudit générateur d'impulsions.

Avantageusement, le deuxième dispositif de détection et de protection peut comprendre par ailleurs un thyristor disposant d'une alimentation autonome et apte à conserver par effet mémoire le court-circuit éventuellement survenu.

Selon un mode de réalisation, le premier point de mesure se situe sur le canal de sortie du circuit secondaire, en amont de la diode de sortie, de façon à mesure la tension de sortie.

Avantageusement, la première tension seuil et la deuxième tension seuil sont configurées de telle manière qu'elles sont comprises entre une tension nominale de fonctionnement et une tension maximale admissible.

Avantageusement, la première tension seuil et la deuxième tension seuil sont configurées de telle manière que, tenant compte d'un dysfonctionnement de l'alimentation entraînant une montée de la tension de sortie selon une pente maximale possible, le premier dispositif de détection et de protection est apte à déclencher le court-circuit à stopper tout transfert d'énergie au canal de sortie avant que la tension de sortie n'atteigne la tension maximale admissible.

Avantageusement, la première tension seuil et la deuxième tension seuil sont configurées de telle manière que, tenant compte d'un dysfonctionnement de l'alimentation entraînant une montée de la tension de sortie selon une pente maximale possible, le deuxième dispositif de détection et de protection est apte à déclencher le court-circuit à stopper tout transfert d'énergie au canal de sortie avant que la tension de sortie n'atteigne la tension maximale admissible.

Selon un mode de réalisation particulier, le premier dispositif de détection et de protection comprend un opto-coupleur apte à transférer de l'énergie en vue de générer ledit court-circuit lorsqu'un défaut a été détecté, c'est-à-dire lorsque la tension mesurée au premier point de mesure est supérieure à la première tension seuil.

Selon un mode de réalisation particulier, le deuxième dispositif de détection et de protection comprend un transistor apte à transférer de l'énergie en vue générer ledit court-circuit lorsqu'un défaut a été détecté, c'est-à-dire lorsque la tension mesurée au deuxième point de mesure est supérieure à la deuxième tension seuil.

L'invention concerne en outre une alimentation pour automate programmable comprenant un dispositif de protection contre les surtensions conforme à l'un quelconque des modes de réalisations présentés ci-dessus.

L'invention a également pour objet un automate programmable comportant une alimentation comprenant un dispositif de protection contre les surtensions conforme à l'un quelconque des modes de réalisations présentés ci-dessus.

D'autres caractéristiques et avantages de l'invention apparaîtront à la lecture de la description qui suit, en référence aux dessins annexés, qui représentent :
- la figure 1 : un diagramme permettant d'appréhender le fonctionnement du dispositif selon l'invention à travers un exemple ;
- la figure 2A : le schéma d'une alimentation d'automate programmable doté d'un premier dispositif de détection et de protection appartenant au dispositif de protection contre les surtensions selon un mode de réalisation de l'invention ;
- la figure 2B : le schéma d'une alimentation d'automate programmable doté d'un deuxième dispositif de détection et de protection appartenant au dispositif de protection contre les surtensions selon un mode de réalisation de l'invention.

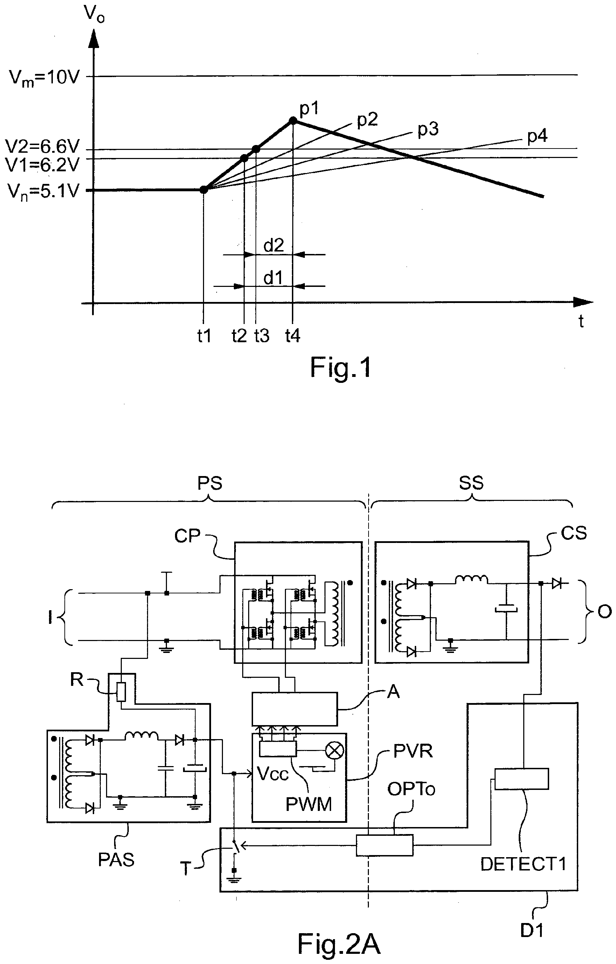

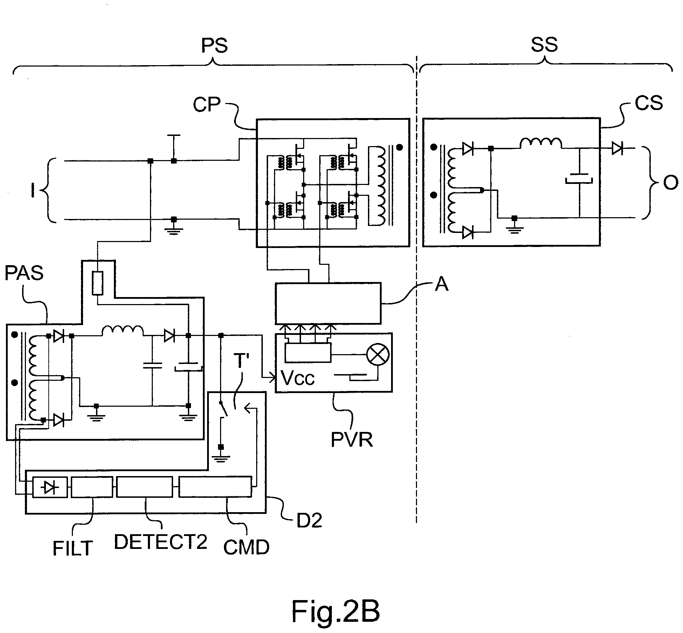

L'alimentation pour automate programmable représentée schématiquement sur les figures 2A et 2B comprend un circuit primaire PS, présentant un canal d'entrée I et comprenant un convertisseur primaire CP, et un circuit secondaire SS, présentant un canal de sortie O sur lequel est branchée une diode de sortie D, et comprenant un convertisseur secondaire CS couplé au convertisseur primaire CP pour en recevoir son énergie de fonctionnement. Une alimentation auxiliaire primaire PAS est également couplée au convertisseur primaire CP pour en recevoir son énergie de fonctionnement et alimente un dispositif de régulation de la tension primaire PVR comprenant notamment un générateur d'impulsions PWM qui pilote le convertisseur primaire CP via un amplificateur A.

Le diagramme de la figure 1 représente le fonctionnement du dispositif de protection contre les surtensions selon l'invention lorsqu'un défaut survient sur une alimentation d'automate programmable qui en est équipée.

Par hypothèse, pour illustrer à travers un exemple le fonctionnement du dispositif selon l'invention, il est considéré une alimentation censée délivrer une tension nominale Vn d'environ 5 V à des composants d'un automate programmable dont la tension maximale admissible Vm, à ne pas dépasser au risque que ces composants ne puissent assurer un fonctionnement sécurisé, est égale à 10 V.

Ce diagramme présente, dans ce contexte, l'évolution de la tension de sortie Vo, au niveau du canal de sortie O, en fonction du temps. Un défaut survient, par exemple au niveau du convertisseur primaire CP à l'instant tl. A l'instant t2, le premier dispositif de détection et de protection D1 du dispositif de protection contre les surtensions selon l'invention permet de mesurer une tension de sortie supérieure à la première tension seuil V1 = 6,2 V. A l'instant t3, le deuxième dispositif de protection du dispositif de détection et de protection D2 contre les surtensions selon l'invention permet de mesurer une tension de sortie supérieure à la deuxième tension seuil V2 = 6,6 V.

A compter de la survenance du défaut à l'instant t1, la tension de sortie Vo va croître selon une pente p1, p2, p3, ou p4 dépendante du type de défaut et de la charge connectée au circuit secondaire SS. Pour la mise en oeuvre du mode de réalisation préféré du dispositif selon l'invention, il est considéré, pour définir les première et deuxième tensions seuils V1, V2 que la croissance de la tension de sortie Vo se fait selon le pire cas de figure possible, c'est-à-dire en présence d'une charge faible et le convertisseur primaire CP induisant un maximum d'énergie sur le convertisseur secondaire CS, correspondant à la pente p1 sur la figure 1. Les première et deuxième tensions seuil V1, V2 sont alors configurées de telle manière que, tenant compte du temps d1, d2 nécessaire aux premier et deuxième dispositifs de détection et de protection D1, D2 pour stopper de façon effective tout transfert d'énergie au circuit secondaire SS, la tension de sortie, même en suivant la pente de croissance p1, ne pourra pas atteindre la tension maximale admissible Vm égale à 10 V dans l'exemple du diagramme de la figure 1.

De cette manière, le dispositif de protection contre les surtensions selon l'invention, qui comporte donc un premier et un deuxième dispositifs de détection et de protection D1, D2, est apte à garantir que l'alimentation pour automate programmable qui en dispose ne peut pas délivrer de tension supérieure à la tension maximale admissible Vm par les composants de l'automate considéré.

Par conséquent, ladite alimentation pour automate programmable peut être déclarée comme étant non-interférante.

Les figures 2A et 2B représentent séparément, pour faciliter leur lecture, les deux entités constitutives du dispositif de protection contre les surtensions selon l'invention à travers un mode de réalisation particulier. Ainsi, la figure 2A représente un exemple de mode de réalisation du premier dispositif de détection et de protection D1 et la figure 2B représente un exemple de mode de réalisation du deuxième dispositif de détection et de protection D2. Un dispositif complet de protection contre les surtensions selon l'invention comprend à la fois d'une part un premier dispositif de détection et de protection D1 et d'autre part un deuxième dispositif de détection et de protection D2.

Le fonctionnement du dispositif de protection contre les surtensions est tel que lorsqu'une surtension est détectée, que ce soit au niveau du circuit primaire PS ou secondaire SS, l'information est transmise au circuit primaire PS afin que l'alimentation auxiliaire primaire PAS soit coupée par des moyens adaptés.

La figure 2A représente par conséquent un exemple de premier dispositif de détection et de protection D1.

Ainsi, dans le mode de réalisation représenté à la figure 2A, la détection d'une surtension est réalisée par l'intermédiaire d'un comparateur de seuil DETECT1 au niveau d'un premier point de mesure situé sur le canal de sortie O, au niveau du circuit secondaire SS, en amont de la diode de sortie D.

L'information est transmise via un opto-coupleur OPTO à destination du circuit primaire PS où des moyens adaptés vont court-circuiter la liaison entre l'alimentation auxiliaire primaire PAS et le dispositif de régulation de la tension primaire PVR.

Ce court-circuit est réalisé à l'aide d'un thyristor T, disposant d'une alimentation indépendante, via la résistance R, lui permettant de maintenir son état et présentant l'avantage additionnel d'induire un «effet mémoire» par lequel ledit thyristor T conserve, grâce à cette alimentation indépendante, l'information selon laquelle le dispositif de protection contre les surtensions a généré un court-circuit et l'extinction de l'alimentation. Ainsi, l'état de court-circuit est maintenu tant qu'il existe une tension sur le canal d'entrée I.

La figure 2B représente un exemple de deuxième dispositif de détection et de protection D2. Ainsi, dans le mode de réalisation représenté à la figure 2B, la détection d'une surtension est réalisée, via le filtre FILT, par l'intermédiaire d'un comparateur de seuil DETECT2 connecté au niveau d'un deuxième point de mesure situé sur le transformateur de l'alimentation auxiliaire primaire PAS, où la tension mesurée est proportionnelle à la tension de sortie qui serait mesurée au niveau du canal de sortie O.

Le but de ce deuxième dispositif de détection et de protection consiste à détecter l'existence d'une surtension en sortie de l'alimentation auxiliaire primaire PAS et de transmettre l'information, par exemple via un transistor bipolaire, à un composant de commande CMD apte à générer le court-circuit visant à stopper tout transfert d'énergie vers le circuit secondaire SS, par exemple, via le même thyristor T ou, d'une façon préférée, via un autre thyristor T', selon le même principe que pour le premier dispositif de détection et de protection D1. Le composant de commande CMD peut également être apte à provoquer l'extinction de l'alimentation auxiliaire primaire PAS.

Il est à noter que les schémas des figures 2A et 2B ne constituent que des exemples de mode de réalisation des premier et deuxième dispositifs de détection et de protection D1, D2 et que d'autres modes de réalisation peuvent être envisagés.

Pour mettre en oeuvre le dispositif de protection contre les surtensions selon l'invention, il est en particulier nécessaire de réaliser au moins une mesure de la tension de sortie et préférentiellement d'une tension image de la tension de sortie par l'intermédiaire de deux dispositifs de détection et de protection D1, D2 indépendants.

Comme représenté sur les figures 2A et 2B, le court-circuit généré par le dispositif de protection contre les surtensions est préférentiellement réalisé en amont du générateur d'impulsion PWM, contrôlant le découpage, et qui se retrouve passivé (rendre passif) du fait dudit court-circuit.

De préférence, le moyen de génération du court-circuit agissant rendre passif le générateur d'impulsions PWM, pour chacun desdits premier et deuxième dispositifs de détection et de protection D1, D2, mémorise le défaut survenu au minimum tant que l'alimentation auxiliaire primaire PAS reçoit de l'énergie via le canal d'entrée I. De préférence, on utilise un thyristor T, T', déclenché par la détection de défaut et maintenu par un courant provenant du canal d'entrée I via une résistance. L'utilisation du thyristor permet par ailleurs de bénéficier d'une rapidité d'exécution du court-circuit satisfaisante.

En résumé, le dispositif de protection contre les surtensions selon la présente invention concerne en particulier un dispositif double de détection de surtension apte à éradiquer toute possibilité qu'une alimentation d'automate programmable ne délivre une tension supérieure à une tension maximale admissible considérée.

Un intérêt de ce dispositif réside dans le fait qu'il permet de déclarer « non-interférante » une alimentation pour automate programmable qui en est dotée, évitant ainsi les contraintes liées à l'obtention d'une certification de fonctionnement sécurisé lorsque ledit automate programmable comporte lui-même des composants certifiés.

## Revendications

1. Dispositif de protection contre les surtensions apte à s'adapter sur une alimentation d'automate programmable, ladite alimentation comprenant :
• un circuit primaire (PS) recevant de l'énergie à convertir via un canal d'entrée (I), et comprenant une alimentation auxiliaire primaire (PAS) ;
• un circuit secondaire (SS) couplé au circuit primaire (PS), présentant un canal de sortie (O) où peut être mesurée une tension de sortie (Vo) et sur lequel est connectée une diode de sortie,
**caractérisé en ce qu'**il comprend :
• un premier dispositif de détection et de protection (D1) apte à mesurer la tension en un premier point du circuit secondaire (SS) ou du circuit primaire (PS), à comparer la tension mesurée audit premier point à une première tension seuil (V1) et à déclencher un court-circuit si ladite tension mesurée au premier point est supérieure à ladite première tension seuil (V1), de manière à stopper tout transfert d'énergie au canal de sortie (O) ;
• un deuxième dispositif de détection et de protection (D2) apte à mesurer la tension en un deuxième point situé sur ladite alimentation auxiliaire primaire (PAS), de façon à mesurer une tension image de la tension de sortie (Vo), à comparer la tension mesurée audit deuxième point à une deuxième tension seuil (V2), à déclencher un court-circuit si ladite tension mesurée au deuxième point est supérieure à ladite deuxième tension seuil (V2), de manière à stopper tout transfert d'énergie au canal de sortie, et à couper l'alimentation auxiliaire primaire (PAS).

2. Dispositif selon la revendication 1, **caractérisé en ce que** le premier dispositif de détection et de protection (D1) comprend par ailleurs un thyristor (T) disposant d'une alimentation indépendante et apte à conserver par effet mémoire le court-circuit éventuellement survenu.

3. Dispositif selon l'une des revendications 1 à 2, le circuit primaire (PS) comprenant un convertisseur primaire (CP) un dispositif de boucle de régulation comprenant un générateur d'impulsions (PWM) contrôlant ledit convertisseur primaire (CP) par l'intermédiaire duquel le circuit primaire (PS) est connecté au circuit secondaire (SS), **caractérisé en ce que** ledit court-circuit visant à stopper tout transfert d'énergie au canal de sortie (O) est apte à rendre passif ledit générateur d'impulsions (PWM).

4. Dispositif selon l'une des revendications 1 à 3, **caractérisé en ce que** le deuxième dispositif de détection et de protection (D2) comprend par ailleurs un thyristor (T') disposant d'une alimentation indépendante et apte à conserver par effet mémoire le court-circuit éventuellement survenu.

5. Dispositif selon l'une des revendications précédentes, **caractérisé en ce que** le premier point de mesure se situe sur le canal de sortie (O) du circuit secondaire (SS), en amont de la diode de sortie, de façon à mesure la tension de sortie (Vo).

6. Dispositif selon l'une quelconque des revendications précédentes, **caractérisé en ce que** la première tension seuil (V1) et la deuxième tension seuil (V2) sont configurées de telle manière qu'elles sont comprises entre une tension nominale (Vn) de fonctionnement et une tension maximale admissible (Vm).

7. Dispositif selon la revendications 6, **caractérisé en ce que** la première tension seuil (V1) et la deuxième tension seuil (V2) sont configurées de telle manière que, tenant compte d'un dysfonctionnement de l'alimentation entraînant une montée de la tension de sortie (Vo) selon une pente maximale possible (p1), le premier dispositif de détection et de protection (D1) est apte à déclencher le court-circuit et à stopper tout transfert d'énergie au canal de sortie (O) avant que la tension de sortie (Vo) n'atteigne la tension maximale admissible (Vm).

8. Dispositif selon l'une des revendications 6 à 7, **caractérisé en ce que** la première tension seuil (V1) et la deuxième tension seuil (V2) sont configurées de telle manière que, tenant compte d'un dysfonctionnement de l'alimentation entraînant une montée de la tension de sortie (Vo) selon une pente maximale possible (p1), le deuxième dispositif de détection et de protection (D2) est apte à déclencher le court-circuit et à stopper tout transfert d'énergie au canal de sortie (O) avant que la tension de sortie (Vo) n'atteigne la tension maximale admissible (Vm).

9. Dispositif selon l'une quelconque des revendications précédentes, **caractérisé en ce que** le premier dispositif de détection et de protection (D1) comprend un opto-coupleur (OPTO) participant au transfert de l'énergie en vue de générer ledit court-circuit lorsqu'un défaut a été détecté, c'est-à-dire lorsque la tension mesurée au premier point de mesure est supérieure à la première tension seuil (V1).

10. Dispositif selon l'une quelconque des revendications précédentes, **caractérisé en ce que** le deuxième dispositif de détection et de protection (D2) comprend un transistor (T') participant au transfert de l'énergie en vue de générer ledit court-circuit lorsqu'un défaut a été détecté, c'est-à-dire lorsque la tension mesurée au deuxième point de mesure est supérieure à la deuxième tension seuil (V2).

11. Alimentation pour automate programmable comprenant un dispositif de protection contre les surtensions selon l'une quelconque des revendications 1 à 10.

12. Automate programmable comportant une alimentation comprenant un dispositif de protection contre les surtensions selon l'une quelconque des revendications 1 à 10.

## Patentansprüche

1. Vorrichtung zum Schutz vor Überspannungen, die sich an eine Versorgung einer programmierbaren Steuerung anpassen kann, wobei die Versorgung Folgendes umfasst:
- eine primäre Schaltung (PS), die die umzusetzende Energie über einen Eingangskanal (I) empfängt und eine primäre Hilfsversorgung (PAS) enthält;
- eine sekundäre Schaltung (SS), die mit der primären Schaltung (PS) gekoppelt ist und einen Ausgangskanal (O) aufweist, an dem eine Ausgangsspannung (Vo) gemessen werden kann und mit dem eine Ausgangsdiode verbunden ist,
**gekennzeichnet durch**:
- eine erste Detektions- und Schutzvorrichtung (D1), die die Spannung an einem ersten Punkt der sekundären Schaltung (SS) oder der primären Schaltung (PS) messen kann, die gemessene Spannung an dem ersten Punkt mit einer ersten Schwellenspannung (V1) vergleichen kann und einen Kurzschluss auslösen kann, wenn die an dem ersten Punkt gemessene Spannung größer als die erste Schwellenspannung (V1) ist, derart, dass jegliche Energieübertragung an dem Ausgangskanal (O) angehalten wird;
- eine zweite Detektions- und Schutzvorrichtung (D2), die die Spannung an einem zweiten Punkt, der sich bei der primären Hilfsversorgung (PAS) befindet, messen kann, derart, dass eine Spannung gemessen wird, die ein Bild der Ausgangsspannung (Vo) ist, die an dem zweiten Punkt gemessene Spannung mit einer zweiten Schwellenspannung (V2) vergleichen kann und einen Kurzschluss auslösen kann, wenn die an dem zweiten Punkt gemessene Spannung größer als die zweite Schwellenspannung (V2) ist, derart, dass jegliche Energieübertragung an den Ausgangskanal angehalten wird und die primäre Hilfsversorgung (PAS) unterbrochen wird.

2. Vorrichtung nach Anspruch 1, **dadurch gekennzeichnet, dass** die erste Detektions- und Schutzvorrichtung (D1) außerdem einen Thyristor (T) umfasst, der über eine unabhängige Versorgung verfügt und durch Speicherwirkung den eventuell aufgetretenen Kurzschluss aufrechterhalten kann.

3. Vorrichtung nach einem der Ansprüche 1 bis 2, wobei die primäre Schaltung (PS) einen Hauptwandler (CP) und eine Regulierungsschleifenvorrichtung umfasst, die einen Pulsgenerator (PWM) enthält, der den primären Wandler (CP) steuert, über den die primäre Schaltung (PS) mit der sekundären Schaltung (SS) verbunden ist, **dadurch gekennzeichnet, dass** der Kurzschluss, der jegliche Energieübertragung an den Ausgangskanal (O) anhalten soll, den Pulsgenerator (PWM) passiv halten kann.

4. Vorrichtung nach einem der Ansprüche 1 bis 3, **dadurch gekennzeichnet, dass** die zweite Detektions- und Schutzvorrichtung (D2) außerdem einen Thyristor (T') umfasst, der über eine unabhängige Versorgung verfügt und durch Speicherwirkung den eventuell auftretenden Kurzschluss aufrechterhalten kann.

5. Vorrichtung nach einem der vorhergehenden Ansprüche, **dadurch gekennzeichnet, dass** sich der erste Messpunkt in dem Ausgangskanal (O) der sekundären Schaltung (SS) stromaufseitig der Ausgangsdiode befindet, derart, dass die Ausgangsspannung (Vo) gemessen wird.

6. Vorrichtung nach einem der vorhergehenden Ansprüche, **dadurch gekennzeichnet, dass** die erste Schwellenspannung (V1) und die zweite Schwellenspannung (V2) in der Weise konfiguriert sind, dass sie zwischen einer Nennbetriebsspannung (Vn) und einer zulässigen Maximalspannung (Vm) liegen.

7. Vorrichtung nach Anspruch 6, **dadurch gekennzeichnet, dass** die erste Schwellenspannung (V1) und die zweite Schwellenspannung (V2) in der Weise konfiguriert sind, dass unter Berücksichtigung einer Fehlfunktion der Versorgung, die einen Anstieg der Ausgangsspannung (Vo) mit einer möglichen maximalen Steigung (p1) zur Folge hat, die erste Detektions- und Schutzvorrichtung (D1) den Kurzschluss auslösen kann und jegliche Energieübertragung an den Ausgangskanal (O) anhalten kann, bevor die Ausgangsspannung (Vo) die zulässige Maximalspannung (Vm) erreicht.

8. Vorrichtung nach einem der Ansprüche 6 bis 7, **dadurch gekennzeichnet, dass** die erste Schwellenspannung (V1) und die zweite Schwellenspannung (V2) in der Weise konfiguriert sind, dass unter Berücksichtigung einer Fehlfunktion der Versorgung, die einen Anstieg der Ausgangsspannung (Vo) mit einer möglichen maximalen Steigung (P1) zur Folge hat, die zweite Detektions- und Schutzvorrichtung (D2) den Kurzschluss auslösen kann und jegliche Energieübertragung an den Ausgangskanal (O) anhalten kann, bevor die Ausgangsspannung (Vo) die zulässige Maximalspannung (Vm) erreicht.

9. Vorrichtung nach einem der vorhergehenden Ansprüche, **dadurch gekennzeichnet, dass** die erste Detektions- und Schutzvorrichtung (D1) einen Optokoppler (OPTO) umfasst, der zu der Übertragung der Energie beiträgt, um den Kurzschluss zu erzeugen, wenn ein Fehler detektiert wird, d. h. dann, wenn die an dem ersten Messpunkt gemessene Spannung größer als die erste Schwellenspannung (V1) ist.

10. Vorrichtung nach einem der vorhergehenden Ansprüche, **dadurch gekennzeichnet, dass** die zweite Detektions- und Schutzvorrichtung (D2) einen Transistor (T') umfasst, der zu der Übertragung der Energie beiträgt, um den Kurzschluss zu erzeugen, wenn ein Fehler detektiert worden ist, d. h., wenn die an dem zweiten Messpunkt gemessene Spannung größer als die zweite Schwellenspannung (V2) ist.

11. Versorgung für programmierbare Steuerung, die eine Vorrichtung zum Schutz vor Überspannungen nach einem der Ansprüche 1 bis 10 enthält.

12. Programmierbare Steuerung, die eine Versorgung umfasst, die eine Vorrichtung zum Schutz vor Überspannungen nach einem der Ansprüche 1 bis 10 enthält.

## Claims

1. A device for protecting against overvoltage that can be adapted to a programmable logic controller power supply, said power supply including:
• a primary circuit (PS) receiving energy for conversion via an input channel (I) and including a primary auxiliary power supply (PAS),
• a secondary circuit (SS) coupled with the primary circuit (PS), presenting an output channel (0) where an output voltage (Vo) can be measured, and to which an output diode is connected,
**characterized in that** it includes:
• a first detection and protection device (D1) capable of measuring the voltage at a first point of the secondary circuit (SS) or of the primary circuit (PS), of comparing the voltage measured at said first point with a first threshold voltage (V1) and of triggering a short-circuit if said voltage measured at the first point is higher than said first threshold voltage (V1), such as to stop all energy transfer toward the output channel (0);
• a second detection and protection device (D2) capable of measuring the voltage at a second point situated on said primary auxiliary power supply (PAS), such as to measure an image voltage of the output voltage (Vo), of comparing the voltage measured at said second point with a second threshold voltage (V2), of triggering a short-circuit if said voltage measured at the second point is higher than said second threshold voltage (V2), such as to stop all energy transfer toward the output channel, and of shutting off the primary auxiliary power supply (PAS).

2. The device as claimed in claim 1, **characterized in that** the first detection and protection device (D1) furthermore comprises a thyristor (T) having an independent power supply and capable of maintaining, by memory effect, the short circuit that may have occurred.

3. The device as claimed in one of claims 1 to 2, the primary circuit (PS) including a primary converter (CP) a regulation loop device including a pulse generator (PWM) controlling said primary converter (CP) through which the primary circuit (PS) is connected to the secondary circuit (SS), **characterized in that** said short circuit, aiming to stop all energy transfer toward the output channel (0), is capable of making said pulse generator (PWM) passive.

4. The device as claimed in one of claims 1 to 3, **characterized in that** the second detection and protection device (D2) furthermore includes a thyristor (T') having an independent power supply and capable of maintaining, by memory effect, the short circuit that may have occurred.

5. The device as claimed in one of the preceding claims, **characterized in that** the first measurement point is situated on the output channel (0) of the secondary circuit (SS), upstream of the output diode, such as to measure the output voltage (Vo).

6. The device as claimed in any one of the preceding claims, **characterized in that** the first threshold voltage (V1) and the second threshold voltage (V2) are configured such that they are comprised between a nominal functioning voltage (Vn) and a maximum admissible voltage (Vm).

7. The device as claimed in claim 6, **characterized in that** the first threshold voltage (V1) and the second threshold voltage (V2) are configured such that, taking account of a dysfunction of the power supply causing a rise of the output voltage (Vo) along a possible maximum slope (p1), the first detection and protection device (D1) is capable of triggering the short circuit and stopping all energy transfer toward the output channel (0) before the output voltage (Vo) reaches the maximum admissible voltage (Vm).

8. The device as claimed in one of claims 6 to 7, **characterized in that** the first threshold voltage (V1) and the second threshold voltage (V2) are configured such that, taking account of a dysfunction of the power supply causing a rise of the output voltage (Vo) along a possible maximum slope (p1), the second detection and protection device (D2) is capable of triggering the short circuit and stopping all energy transfer toward the output channel (0) before the output voltage (Vo) reaches the maximum admissible voltage (Vm).

9. The device as claimed in any one of the preceding claims, **characterized in that** the first detection and protection device (D1) includes an optocoupler (OPTO), sharing in the transfer of energy with a view to generating said short circuit when a fault has been detected, that is to say, when the voltage measured at the first measurement point is higher than the first threshold voltage (V1).

10. The device as claimed in any one of the preceding claims, **characterized in that** the second detection and protection device (D2) includes a transistor (T') sharing in the transfer of energy with a view to generating said short circuit when a fault has been detected, that is to say, when the voltage measured at the second measurement point is higher than the second threshold voltage (V2).

11. A power supply for a programmable logic controller including a device for protecting against overvoltage as claimed in any one of claims 1 to 10.

12. A programmable logic controller comprising a power supply including a device for protecting against overvoltage as claimed in any one of claims 1 to 10.
